# EUROPÄISCHE PATENTANMELDUNG

(11) **EP 1 978 647 A2**
(43) Veröffentlichungstag der Anmeldung: **08.10.2008**
(21) Anmeldenummer: 08004533.9
(22) Anmeldetag: 12.03.2008
(51) Int. Cl.: H04B 1/28

(54) **Breitband-Empfangssystem**

(30) Priorität: 01.03.2008 DE 102008012127; 05.04.2007 DE 102007016928
(71) Anmelder: Delphi Delco Electronics Europe GmbH, 42119 Wuppertal (DE)
(72) Erfinder: Schultz, Micha, 31134 Hildesheim (DE); Büchel, Oliver, 31162 Bad Salzdetfurth (DE); Heuer, Christian, 31195 Lampsringe (DE)

(57) **Zusammenfassung**

Ein zum Empfang von Hörrundfunk bestimmtes Empfangssystem wird dargestellt und besteht aus einem eingangsseitigen, eine Antenne (1) aufweisenden, zum Einkoppein eines gesamten Empfangsbandes bestimmten, ein Selektionsmoduf (24) aufweisenden analogen Teil und einem digitalen Teil, der zur Ausgabe eines demodulierten Audiosignals eingerichtet ist. Das Selektionsmodul (24) ist durch eine, in Signalflussrichtung gesehen, Hintereinanderschaltung eines Filters (9), eines regelbaren Dämpfungsgliedes (22), eines Festverstärkers (21) und eines Filters (10) gekennzeichnet. Das ausgangsseitige Band des analogen Teils liegt in einer bandbegrenzten und pegelgeregelten Form vor und es wird in dem Analog-Digital-Konverter (ADC; 12) mit einer Frequenz f_{S} so abgetastet, dass im FM-Bereich im Verhältnis zu dem Nutzband eine Unterabtastung vorliegt, wobei dieses Nutzband vollständig in der zweiten Nyquistzone liegt, so dass gilt f_{S} > fₘₐₓ und f_{S}/2 < fₘᵢₙ. Die gewählte Struktur des Selektionsmodules (24) erlaubt jedoch den Einsatz dieses Empfangsystems auch zur Direktabtastung im AM-Bereich oder auch in anderen Frequenzbereichen, in welchen eine Abtastung nach Art der vorstehend genannten Unterabtastung nicht möglich oder nicht sinnvoll ist. Es ergeben sich im Vergleich mit bekannten Ausführungsformen einer Direktabtastung Vorteile aufgrund eines geringeren Hardwareaufwands des analogen Teils, einer geringen Durchgangsdämpfung, einer höheren Empfindlichkeit sowie eines hohen Aliasingschutzes.

## Beschreibung

Die Erfindung bezieht sich auf ein Breitband-Empfangssystem entsprechend dem Oberbegriff des Anspruchs 1.

Heutigen, nach den Prinzipien des Homo- oder des Heterodynempfängers eingerichteten Empfängerarchitekturen, und zwar sowohl für einen stationären Einsatz als auch für einen Einsatz in Fahrzeugen, ist gemeinsam, dass die Empfangsfrequenz eines Signals mit einer im Empfänger generierten, einstellbaren Oszillatorfrequenz gemischt und in eine feste Zwischenfrequenz umgesetzt wird, die anschließend digitalisiert und weiter verarbeitet wird. Prinzipiell kann auf diese Weise ein breites Frequenzband empfangen werden, wobei durch die einer Digitalisierung vorgelagerte Mischstufe und die feste Zwischenfrequenz die Anforderungen an die Leistungsfähigkeit, insbesondere die Abtastrate sowie die Auflösung eines ADC (Analog-Digital-Konverter), unabhängig von der jeweils gewählten Empfangsfrequenz sind. Durch die Wahl einer niedrigen Zwischenfrequenz und einer guten Selektion eines Bandes oder Kanals werden die Anforderungen an den ADC weiter reduziert und eine gute Ausnutzung von dessen Dynamikbereich erreicht.

Dieses bekannte Konzept ist jedoch in vielen Fällen, je nach der konkreten Ausführung, durch Störungen gekennzeichnet, die von einem Phasenrauschen eines Lokaloszillators, Nebenempfangsstellen durch Harmonische des Oszillators, I-Q-Imbalance-Problemen und von einer unvollkommenen Spiegelfrequenzunterdrückung durch die der Mischstufe vorgelagerten Filter ausgehen. Zusätzlich führt eine Durchgangsdämpfung der Mischstufe zu einem Empfindlichkeits- und Leistungsverlust. Sämtliche dieser Unvollkommenheiten machen umfangreiche Schaltungsmaßnahmen erforderlich, um eine Korrektur oder wenigstens eine Minderung dieser Störungen zu erreichen.

Auch ist bei diesem Konzept meist die Selektion nur eines Kanals vorgesehen, um die Anforderungen an den nachgeschalteten ADC gering zu halten. Da dieser Zustand hardwaremäßig nach Maßgabe eines definierten Standards festgelegt ist, ist eine Umstellung auf einen anderen Standard, z. B. mit einer anderen Kanalbreite, so dass ein anderes Kanalfilter erforderlich wird, mit einem nicht vertretbaren Aufwand verbunden, da dies mit einem Eingriff in die Hardware verbunden wäre. Die Flexibilität dieses bekannten Systems ist somit gering.

Der Umstand, dass nur ein Kanal empfangen wird, zwingt bei solchen Anwendungen, bei denen mehrere Kanäle gleichzeitig empfangen werden müssen, zu besonderen Maßnahmen. Es besteht beispielsweise bei in Fahrzeugen eingesetzten Radioempfängern ein Bedürfnis, mehr als nur einen Kanal gleichzeitig zu empfangen. Regelmäßig sind in diesen Fällen nämlich drei, in Hardware realisierte Empfängerzweige mit jeweils unterschiedlichen Empfangskanälen aktiv, nämlich ein erster Zweig, der gerade abgehört wird, ein zweiter, der im Hintergrund nach Alternativfrequenzen des gleichen Programminhalts sucht und ein dritter, der auf Verkehrsfunkanwendungen eingestellt ist. Die Anwendung der bekannten Techniken führt zu der Einrichtung von drei voneinander unabhängigen Empfangszweigen, von denen jeder eine Mischstufe, eine Kanalselektion, das heißt ein auf die Bandbreite des empfangenen Dienstes angepasstes Zwischenfrequenzfilter sowie einen ADC aufweist, so dass sich insgesamt ein entsprechend erhöhter Hardwareaufwand ergibt.

Um dem Bedürfnis nach einem Parallelempfang mehrerer Kanäle entgegenzukommen, und zwar ohne die ansonsten hiermit einhergehende Vervielfachung von Empfangszweigen der vorstehend genannten Art, somit unter Vermeidung eines entsprechend erhöhten Hardwareaufwandes, ist bei digitalen Radioempfängern ein Trend erkennbar, die Schnittstelle zwischen analoger und digitaler Signalverarbeitung so weit wie möglich an die Antenne zu verlegen, um ein Höchstmaß an Flexibilität des Empfangssystems zu gewährleisten, wobei von dem Umstand Gebrauch gemacht wird, dass die Funktion einer digitalen Hardware letztendlich softwaremäßig definiert wird, so dass diese im Bedarfsfall ohne großen Aufwand umprogrammmiert werden kann, beispielsweise für eine Anpassung an andere Standards.

Das Konzept eines Empfangssystems, bei welchem eine Digitalisierung empfangener Analogsignale in der Nähe der Antenne und unter Vermeidung einer analogen Mischstufe stattfindet, ist beispielsweise aus "A Software Defined Multistandard Tuner Platform for Automotive Applications", T. Müller, M. Sliskovic, J.-F. Luy, H. Schöpp, Zeitschrift Frequenz, Berlin, Vol. 68, Part 5/6, Seiten 136 bis 139, Fachverlag Schiele & Schön GmbH, 2004 bekannt. Bei dieser Direktabtastung werden alle Kanäle des FM-UKW-Radiobands nach einer breitbandigen Filterung mittels eines mehrstufigen UKW-Bandfilters selektiert und nach Pegelregelung einem ADC zugeführt, so dass am Ausgang des ADC das gesamte UKW-Band in digitaler Form vorliegt. Dieses bekannte Empfangssystem würde - eine Signalverarbeitungseinheit (DSPE) von ausreichender Leistungsfähigkeit einmal unterstellt - den parallelen Empfang beliebig vieler Kanäle oder Standards ermöglichen.

Das dort vorgestellte Konzept einer Direktabtastung ist durch eine Abtastrate nach dem Prinzip der Unterabtastung bei f_{S} = 76,8 MHz so angelegt, dass das zu digitalisierende UKW-Radiofrequenzband von 87,5 MHz bis 108 MHz komplett und mittig zu den Bandgrenzen im 3. Nyquistband liegt. Eine Selektion und eine Aliasingunterdrückung erfolgt mittels kaskadierter Bandpassfilter und Verstärker, wobei der Verstärkungsfaktor bei den Verstärkern teilweise digital programmierbar ist.

Weil bei diesem Konzept der Direktabtastung keine analoge Mischstufe vorhanden ist, entfallen die vorstehend genannten, mit der Mischung im Analogen verbundenen Probleme. Auch ist eine erhöhte Flexibilität für den Fall einer Änderung des Standards gegeben. Ungünstig stellt sich jedoch die Wahl der Abtastrate des UKW-Radiobands dar, da dies einen hohen Grad an Filtermaßnahmen erforderlich macht, um die Aliasingunterdrückungsanforderungen für die Digitalisierung dieses Bandes zu erfüllen. Dies führt zu einem hohen Hardwareaufwand und - hiermit zusammenhängend - u. U. zu einer Störanfälligkeit des Systems. Extensive Filtermaßnahmen führen ferner zu einer hohen Dämpfung im Durchgangsband, so dass in Abhängigkeit von der Positionierung der Filter im analogen Empfangspfad die Empfindlichkeit des Systems vermindert wird, oder es werden die Linearitätsanforderungen an analoge Frontendverstärker erhöht.

Ein weiteres Problem könnte sich bei diesem Konzept einer Direktabtastung aus dem Umstand ergeben, dass - betrachtet aus der Richtung der Antenne - dieser im Verlauf des Signalpfades benachbart ein Festverstärker zugeordnet ist. Dies kann dazu führen, dass sich bei für den Fall eines Nahempfangs möglichen hohen Signalpegeln bzw. Starksignalen Verzerrungen aufgrund eines nichtlinearen Verhaltens des Verstärkers ergeben, so dass Intermodulationsprodukte oder harmonische Störer im Nutzband auftreten und die Empfangsqualität veschlechtern.

Die Aufgabe der Erfindung besteht darin, ein Empfangssystem der eingangs bezeichneten Gattung mit einfacher Systemarchitektur und gleichzeitig hoher Leistungsfähigkeit bereitzustellen, welches in einfacher Weise aufbauend auf den Techniken der Direktabtastung eines vollständigen Frequenzbandes zwecks Umwandlung in eine digitale Form Standardunabhängigkeit sowie die Möglichkeit eines Parallelempfangs mittels ausschließlich softwaremäßig dargestellter Tuner ermöglicht.

Gelöst ist diese Aufgabe bei einem solchen Empfangssystem durch die Merkmale des Kennzeichnungsteils des Anspruchs 1.

Erfindungswesentlich ist hiernach der zentrale ADC (Analog-Digital-Konverter), insbesondere dessen Abtastfrequenz fₛ, welche im Zusammenhang mit dem umzusetzenden Nutzband gesehen werden muss. In jedem Fall muss das analoge Eingangssignal des ADC bandbegrenzt sein und durch eine geeignete Wahl der Abtastfrequenz dafür Sorge getragen werden, dass keine Störungen in der Form eines Aliasing auftreten. Erfindungsgemäß ist grundsätzlich, nämlich zumindest für den FM-Bereich eine Unterabtastung eingerichtet, und zwar derart, dass das abzutastende Nutzband vollständig in der zweiten Nyquistzone liegt, und zwar vorzugsweise mittig. Dies ermöglicht einen guten Kompromiss zwischen den Anforderungen an die Filtercharakteristik des analogen Teils und der Leistungsfähigkeit des ADC und weiterer Funktionsgruppen des digitalen Teiles. Speziell für die Direktabtastung des FM-Bandes ergeben sich im Vergleich zu bekannten Anwendungen einer Direktabtastung in der Form einer Unterabtastung geringere Anforderungen an die Flankensteilheit der Charakteristika der analogen Vorfilter, ein geringerer Hardwareaufwand sowie eine geringe Durchgangsdämpfung, und zwar bei vergleichbarer Empfängerempfindlichkeit und hoher Aliasingunterdrückung. Im Rahmen des analogen Teils des Systems können somit Standardfilterkomponenten benutzt werden. Beispielsweise kann für das europäische UKW-FM-Radio-Band von fₘᵢₙ = 87,5 MHz bis fₘₐₓ = 108 MHz erfindungsgemäß eine Abtastfrequenz von 141, 5 MHz genutzt werden. Abweichungen demgegenüber, solange sich das Nutzband in der zweiten Nyquistzone befindet, sind zulässig.

Die Abtastfrequenz entsprechend den Merkmalen des Anspruchs 2 ist eine optimale Frequenz, die sich ergibt, wenn die relativen Bandbreiten beider Übergangsbänder gleich sind. Die Begriffe relatives oberes b_{Üg,ob} und relatives unteres Übergangsband b_{Üg,un} sind jeweils definiert als b_{Üg,ob} = f_{k,ob}/fₘₐₓ und b_{Üg,un} = fₘᵢₙ/f_{k,un,} wobei f_{k,un} die untere und f_{k,ob} die obere kritische Eckfrequenz sind, bei denen unter- und oberhalb des Nutzbandes (durch Aliasing) erstmalig Signalanteile in das Nutzband fallen. Zusätzlich vorteilhaft, jedoch nicht zwingend erforderlich, ist eine symmetrische Charakteristik der Filter für die in diesem Fall gilt, dass die durch das Selektionsmodul hervorgerufene Dämpfung bei den kritischen Frequenzen f_{k,un} und f_{k,ob} gleich groß sind. Die vorgeschlagene symmetrische Dimensionierung der Filter und die Wahl der Abtastfrequenz so, dass die Bedingung b_{Üg,un} = b_{Üg,ob} erfüllt ist, gewährleistet optimalen Schutz gegen Störungen durch Aliasing im Nutzband bei gleichzeitig einer einfachen, aufwandsarmen Filterrealisierung.

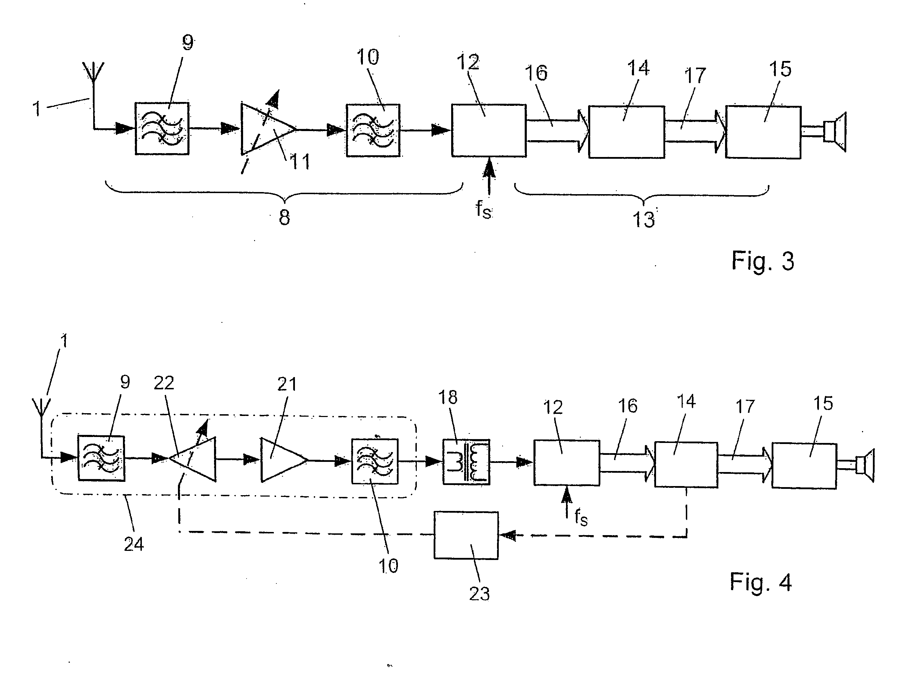

Die Merkmale der Ansprüche 3 bis 5 sind auf die Ausgestaltung des analogen Teiles gerichtet. Aufgrund der geringen Anforderungen an die Flankensteilheit können Filter einer niedrigen Ordnung eingesetzt werden, wobei alternativ zum Schutz des ADC vor einer Übersteuerung ein regelbarer Verstärker oder ein Festverstärker in Kombination mit einem regelbaren Dämpfungsglied eingesetzt werden kann. Durch das dem Festverstärker vorgeschaltete Dämpfungsglied wird erreicht, dass der Eingang des Verstärkers auch bei höchsten Signalpegeln von der Antenne vor Übersteuerungen geschützt ist. Das Dämpfungsglied kann sowohl eine kontinuierliche als auch eine stufenförmige Stellcharakteristik aufweisen. Von besonderem Vorteil ist die Struktur des Selektionsmodules nach Fig. 4, die eine Anwendung dieses Empfangssystems nicht nur im FM-Bereich zur Darstellung einer Direktabtastung nach Art einer Unterabtastung, sondern auch im AM-Bereich ermöglicht, der eine Unterabtastung nicht zulässt.

Eine Einrichtung des Frontendverstärkers entsprechend den Merkmalen des Anspruchs 6 führt zu einer optimalen Leistungsfähigkeit des direktabtastenden Systems, insbesondere zu einer optimalen Nutzung des Dynamikbereiches des ADC.

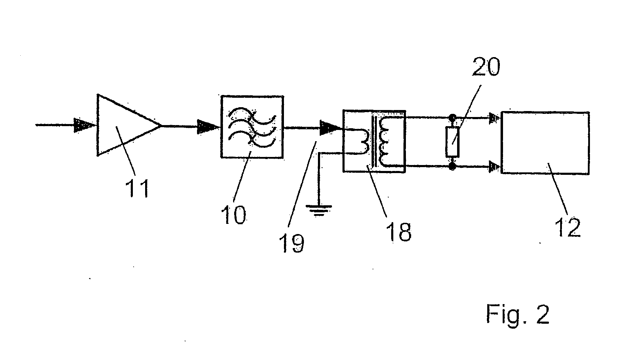

Entsprechend den Merkmalen des Anspruchs 7 ist zur Linearitätsverbesserung ein Trafo mit Impedanztransformation am Eingang des ADC vorgesehen. Über einen Trafo mit einem Übersetzungsverhältnis von Sekundär- zu Primärseite von ü > 1 vor dem Eingang des ADC wird eine Impedanztransformation zwischen einem sekundärseitig parallelgeschalteten Abschlusswiderstand (20, Fig. 2) und der trafoprimärseitigen Impedanz erreicht. Bei geeigneter Dimensionierung des Trafos und des Abschlusswiderstandes weist eine derartige Trafoanordnung eine inhärente Spannungsverstärkung auf, so dass die Pegel an einem dem Trafo vorgeschalteten Verstärker im Vergleich zu einer Anordnung ohne Trafo oder einem Trafo mit ü = 1 und bei gleicher Aussteuerung des ADC geringer ausfallen, was zu weniger Verzerrungen und damit zu einer verbesserten Linearität führt.

Die Merkmale der Ansprüche 8 bis 10 sind auf Funktionen der DSPE gerichtet. Diese bestehen in der softwaremäßigen Darstellung eines oder auch mehrerer Tuner, jedoch auch von zahlreichen, ebenfalls softwaremäßig darstellbaren Steuerfunktionen. Lediglich beispielhaft sei auf AGC-Algorithmen (Automatic Gain Control) hingewiesen, die im Wege einer Softwareimplementierung einfach realisierbar sind. Dies betrifft insbesondere auch nachträgliche Änderungen, welche unter Zugrundelegung einer analogen Technik mit einem unverhältnismäßigen Aufwand verbunden wären.

Die Merkmale der Ansprüche 11 bis 15 sind auf Anwendungen der erfindungsgemäßen Form einer Direktabtastung gerichtet, welche die Integration unterschiedlicher Dienste in ein Systemdesign betreffen, beispielsweise die Behandlung von FM-und AM-Diensten, welch letztere in dem Band von 150 kHz bis 30 MHz untergebracht sind, das Konzept der digitalen Antenne sowie ein Antennendiversitykonzept.

Das Konzept der digitalen Antenne ermöglicht einer Mehrzahl von Endgeräten beispielsweise den Parallelempfang, wobei den Endgeräten über die DSPE Teilbänder bzw. einzelne Kanäle, oder auch das gesamte im Wege der Direktabtastung gewonnene Nutzband zugeleitet wird. Im letzten Fall würden an jedem Endgerät sämtliche AM- und FM-Radiodienste parallel anliegen, so dass jedes Endgerät mittels mehrerer softwaremäßig dargestellter Tuner beliebig viele Kanäle parallel demodulieren und auswerten bzw. ausgeben könnte. Das Konzept der digitalen Antenne bietet somit ein Höchstmaß an Flexibilität und Rekonfigurierbarkeit, da am Ausgang der digitalen Antenne sämtliche Funktionen softwaremäßig darstellbar sind und das gesamte Nutzband digital verfügbar ist.

Bei einem Antennendiversitykonzept können über die DSPE x Signalpfaden y Datenströme bzw. softwaremäßig dargestellte Tuner auf der DSPE zugeordnet werden. Sämtliche, mit der laufenden Bewertung und Zuordnung von Tunern und Signalpfaden verbundenen Funktionen können softwaremäßig über die DSPE abgewickelt werden. Aufgrund einer somit vollständigen Softwareimplementierung bietet dieses Diversitykonzept mit Direktabtastung ein Höchstmaß an Flexibilität und einen großen Spielraum in der Anwendung digitaler Algorithmen und Optimierungen.

Gemäß den Merkmalen des Anspruchs 16 wird eine Mehrzahl der ADC mit einer gemeinsamen Abtastfrequenz beaufschlagt. Dieses ist bei einer Verwendung des Empfangssystems für den gleichzeitigen Empfang im FM- und im AM-Bereich dahingehend angelegt, dass die eingangs genannten Bedingungen einer Unterabtastung für den FM-Bereich gegeben sind, wohingegen für den AM-Bereich bei dieser Abtastfrequenz eine Überabtastung vorliegt. Eine Unterabtastung über das gesamte Spektrum ist in diesem Fall nicht möglich. Aufgrund der gemeinsamen Abtastfrequenz können jedoch beide Bereiche mittels desselben Clockgenerators, z. B. eines Festfrequenzoszillators, betrieben werden. Die Vorteile der einfachen Systemarchitektur und insbesondere der einfachen Architektur des Analogteils bei gleichzeitig hoher Leistungsfähigkeit sind für den Fall der Überabtastung des AM-Bereiches ebenfalls vorhanden.

Die Merkmale der Ansprüche 17 und 18 sind auf die Steuerung eines analogseitigen Dämpfungsgliedes oder eines hier eingesetzten Verstärkers gerichtet. Dies ist, ausgehend von einem in der DSPE eingerichteten AGC-Algorithmus, gegeben, bei dem eine inverse Steuerungskennlinie des Dämpfungsgliedes in digitaler Form oder in einer look-up-Tabelle (LUT) abgelegt ist. Auf diese Weise ist sichergestellt, dass eine Pegeländerung am Eingang des ADC oberhalb einer oder über eine AGC-Schwelle, beispielsweise hervorgerufen durch Fadingeffekte im selektierten Band, nahezu direkt gegengeregelt werden kann. Hierzu wird die Amplitude der Pegeländerung bestimmt und unter Berücksichtigung einer momentan eingestellten Steuerungsspannung der zugehörige Wert aus der LUT für die Ansteuerung des Dämpfungsgliedes verwendet, der diesen Pegelsprung gerade exakt ausgleicht.

Da ein derartiger AGC-Algorithmus lediglich auf Vergleichsoperationen und Speicherzugriffen beruht und keine Filter benötigt werden, die zu Verzögerungen führen würden, wird auf diese Weise eine Fast-Attack-Characteristik erzielt und ein guter Schutz des ADC vor einer Übersteuerung gewährleistet. Insbesondere können Pegelanstiege schnellstmöglich und exakt ausgeglichen werden, wobei eine Reaktionszeit lediglich von der Stellgeschwindigkeit des Dämpfungsglieds abhängt.

Bei einem solchen AGC-Konzept können ein Fast-Attack-, ein Slow-Release-oder auch ein Peak-Hold-Ansatz genutzt werden, so dass stets eine gute Aussteuerung des ADC gegeben ist. Insbesondere eine exakte und beliebig konfigurierbare Peak-Hold-Funktion ist dagegen auf analogem Weg praktisch kaum realisierbar.

Diese Ansätze enthalten neben der Fast-Attack-Reaktion auf einen Pegelsprung oberhalb der oder über die AGC-Schwelle eine Peak-Hold-Funktion, bei der nach dem Auftreten eines Pegelspitzenwertes der zur Ausregelung dieses Spitzenwertes zugehörige Stellwert für das Dämpfungsglied eine Zeitlang gehalten wird, wenn kein neuer Pegelspitzenwert auftritt. Tritt kein neuer Spitzenwert auf, setzt das Slow-Release ein, so dass sich die Dämpfung langsam verringert, bis entweder ein neuer Spitzenwert auftritt, der oberhalb der AGC-Schwelle liegt oder bis die minimale Dämpfungseinstellung des Dämpfungsgliedes erreicht ist.

Indem die Parameter des AGC-Konzeptes entsprechend eingestellt werden, kann bei allen Pegelszenarien gewährleistet werden, dass trotz einer AGC-Schwelle knapp unterhalb der Vollaussteuerung des ADC fast nie eine Übersteuerung des ADC eintritt.

Die vorliegende, auf dem Konzept der Direktabtastung aufbauende Empfängerarchitektur bietet aufgrund eines hohen Maßes an softwaremäßig darstellbaren Funktionen ein Höchstmaß an Flexibilität und Konfigurierbarkeit, insbesondere in allen Fällen, in denen ein Parallelempfang mehrerer Kanäle erwünscht ist. Es zeichnet sich gegenüber bekannten Formen der Direktabtastung aufgrund der gewählten Abtastfrequenz durch einen einfachen, kostengünstig realisierbaren Aufbau seines analogen Teiles aus.

Die Merkmale der Ansprüche 19 bis 23 sind auf Möglichkeiten einer Zusammenfassung des erfindungsgemäßen Direktabtastungskonzepts mit herkömmlichen Mischkonzepten einschließlich dessen Einbeziehung in ein Antennendiversitykonzept gerichtet.

Die Erfindung wird im Folgenden unter Bezugnahme auf die beiliegenden Zeichnungen näher erläutert. Es zeigen:

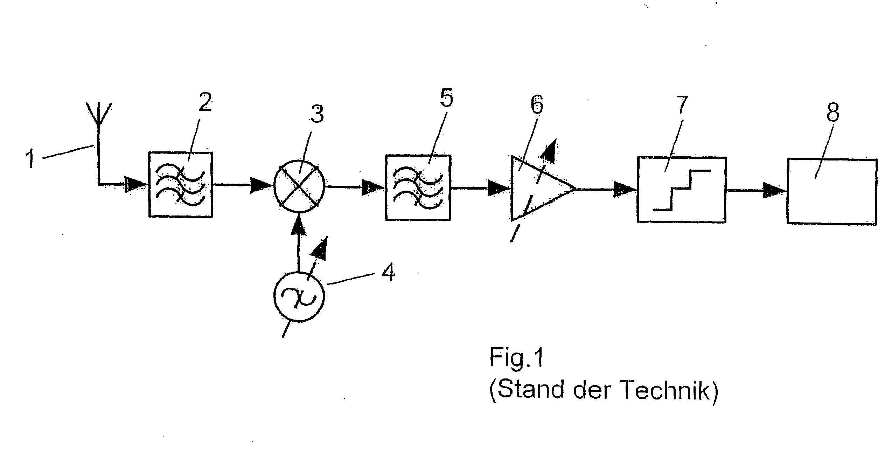

Fig. 1 ein Blockschaltbild eines herkömmlichen Heterodynempfängers;
Fig. 2 ein Blockschaltbild zur Verbesserung der Linearität vor dem Eingang eines Analog-Digital-Konverters;
Fig. 3 eine Prinzipdarstellung eines Blockschaltbildes eines erfindungsgemäßen Empfangssystems;
Fig. 4 ein Blockschaltbild eines erfindungsgemäßen Empfangsystems mit verbesserter Linerarität;
Fig. 5 ein Blockschaltbild eines erfindungsgemäßen Empfangssystems mit zwei Analog-Digital-Konvertern;
Fig. 6 ein Blockschaltbild eines erfindungsgemäßen Empfangssystems mit einem Analog-Digital-Konverter;
Fig. 7 ein Blockschaltbild einer digitalen Antenne als Anwendung eines erfindungsgemäßen Empfangssystems;
Fig. 8 ein Blockschaltbild einer Antennendiversity-Anordnung als Anwendungsfall eines erfindungsgemäßen Empfangssystems;
Fig. 9 ein Blockschaltbild der Erfindung in Form eines direktabtastenden Empfängers für AM und FM in Kombination mit analogen Tunern für die Integration von weiteren Diensten und selektierten Frequenzbereichen;
Fig. 10 ein Blockschaltbild der Erfindung in Form eines direktabtastenden Empfängers für AM und FM in Kombination mit analogen Tunern für die Integration von weiteren Diensten und selektierten Frequenzbereichen mit reduzierten Anforderungen an die ADC (12, 12') für minimale Störungen durch Aliasing;

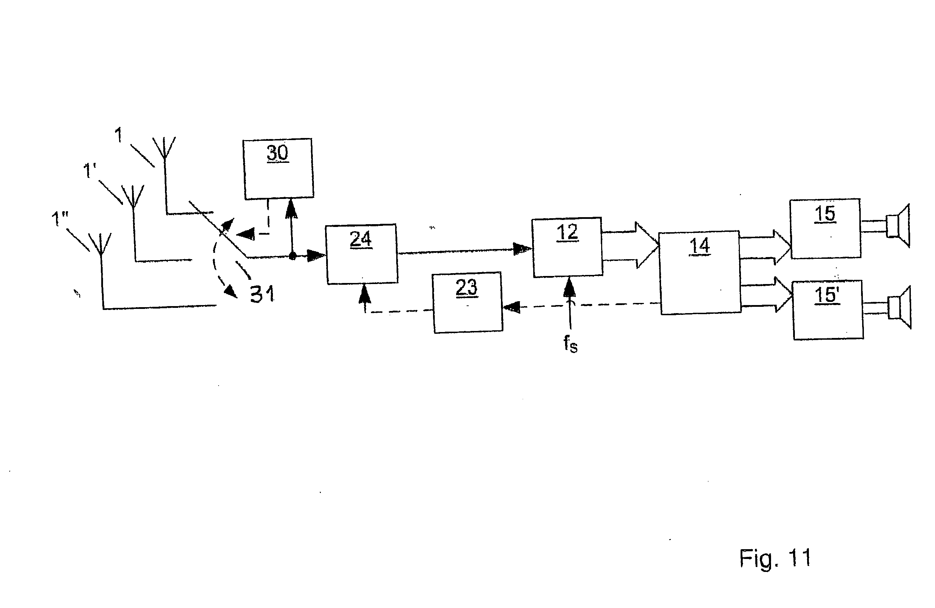

Fig. 11 eine Kombination der Erfindung mit einem aufwandsarmen Antennenschaltdiversitykonzept für die Optimierung der Signalqualität insbesondere eines schmalbandigen Empfangsbandes oder eines Einzelkanals.

Es wird im Folgenden zunächst auf die Zeichnungsfigur 1 Bezug genommen, welche das Schaltungskonzept eines herkömmlichen Heterodynempfängers zeigt.

Das über eine Antenne 1 eingekoppelte Empfangssignal gelangt über ein für die Unterdrückung einer Spiegelfrequenz bestimmtes Filter 2 zu einer Mischstufe 3, in der das Signal mit einer nach Maßgabe des gewünschten Kanals eingestellten Frequenz eines Lokaloszillators 4 gemischt und in eine feste, das heißt von der Empfangsfrequenz unabhängige Zwischenfrequenz (ZF) umgesetzt wird. Ein zweites, sich anschließendes Filter 5 ist zur Kanalselektion auf der Zwischenfrequenzstufe sowie als Aliasingfilter für den Abtastprozess der Digitalisierung bestimmt und eingerichtet. Durch eine automatische Verstärkungsregelung 6 (AGC) wird das ZF-Signal hinsichtlich seines Pegels an die Eingangsseite eines ADC 7 (Analog-Digital-Konverter) angepasst, wobei in einer Signalverarbeitungseinheit 8 das nunmehr digitale Signal weiter umgesetzt wird, und zwar mit dem Ziel einer Gewinnung des Nutzsignals durch Demodulation.

Wesentlich für dieses bekannte Schaltungskonzept ist eine Umsetzung eines Empfangsignals in eine feste Zwischenfrequenz durch Mischung mit einer variablen Oszillatorfrequenz im analogen Bereich und eine sich hieran anschließende Digitalisierung.

Zur Vermeidung der mit diesem bekannten Konzept verbundenen, eingangs bereits dargelegten Unzulänglichkeiten, welche bei der Darstellung eines gleichzeitigen Empfangs mehrerer Kanäle auftreten, wird zunächst auf die Zeichnungsfigur 3 Bezug genommen, welche das erfindungsgemäße Konzept in Grundzügen zeigt.

Mit 8 ist ein analoger Teil bezeichnet, der eingangsseitig mit der Antenne 1 in Verbindung steht und aus zwei Filtern 9, 10 besteht, zwischen denen sich ein variabler Verstärker 11 befindet. Es kann sich bei dem Verstärker 11 um einen einzelnen Verstärker, jedoch auch um eine Kaskade von Verstärkern handeln. Der Verstärker 11 ist mit der Maßgabe angelegt, dass, betrachtet am Ausgang des ADC 12, der in einem Kanal des Nutzbands durch den Verstärker erzeugte Rauschpegel weniger als 10 dB oberhalb oder auch unterhalb des im ungünstigsten Fall von dem ADC in diesem Kanal erzeugten Rauschpegels liegt. Auf diese Weise ist ein guter Kompromiss zwischen der System-Empfindlichkeit und der Ausnutzung des Dynamikbereichs des ADC gegeben. Die Filter 9, 10 dienen zur Selektion des über die Antenne 1 eingekoppelten Frequenzbands, wobei das Filter 10 zusätzlich dazu bestimmt ist, Störungen, die außerhalb des zu empfangenden Frequenzbandes liegen, die jedoch durch den vorgeschalteten Verstärker erzeugt werden, wie Harmonische oder ein breitbandiges Rauschen, zu unterdrücken, da diese Störungen ansonsten in dem nachfolgenden Abtastprozess mit der Abtastfrequenz f_{S} erfasst werden und in das Nutzsignal gelangen könnten (Aliasing).

Der Verstärker 11 bzw. die Kaskade aus Dämpfungsglied und Festverstärker ist dahingehend angelegt und angesteuert, dass die Amplitude des analogen Zeitsignals am Ausgang des Filters 10 bzw. am Eingang des nachfolgenden ADC 12 geregelt ist, so dass insbesondere der ADC nicht übersteuert wird. Der Verstärker 11 bewirkt eine Entkopplung der beiden Filter 9, 10, so dass sich deren Dämpfungswerte zu einer Gesamtdämpfung addieren.

Mit 13 ist ein sich an den ADC 12 anschließender digitaler Teil bezeichnet, der aus einer digitalen Signalprozessierungseinheit (DSPE) 14 und einem Digital-Analog-Konverter (DAC) 15 besteht, an dessen Ausgang das in üblicher Weise wiedergebbare Nutzsignal zur Verfügung steht. Die DSPE 14 ist dahingehend eingerichtet, dass der dieser Einheit eingangsseitig zugeführte Datenstrom 16 mit der Wortbreite M Bit mit der Frequenz f_{S} weiter aufbereitet, insbesondere demoduliert und ausgangsseitig in einen Datenstrom 17 mit der Wortbreite N Bit umgesetzt wird, der das Nutzsignal darstellt, das in dem nachgeordneten DAC 15 umgesetzt wird.

Das im Sinne der Erfindung wichtigste Element dieses Konzeptes ist der ADC 12, da von diesem und der Abtastfrequenz f_{S} sowie deren Abstimmung mit der Frequenzlage des abzutastenden Bands der entscheidende Einfluss auf die Leistungsfähigkeit des Gesamtsystems ausgeht.

Fig. 2 zeigt eine Möglichkeit, die Linearität am Eingang des ADC 12 zu verbessern, indem zwischen diesem und dem Filter 10 ein Trafo 18 mit Impedanztransformation (Übersetzungsverhältnis von Sekundär- zu Primärseite von ü > 1) angeordnet ist. Trafoausgangsseitig ist der ADC 12 angeschlossen und hierzu parallel ein Terminierungswiderstand 20. Dies bedeutet, dass sich die Spannungspegel am Terminierungswiderstand 20 um das Übersetzungsverhältnis des Trafos 18 von den Spannungspegeln am Trafoeingang 19 unterscheiden, so dass der Trafo faktisch in dieser Anordnung einen Verstärker bildet. Dies bedeutet ferner, dass bei gleichem Aussteuerbereich des ADC 12 die Pegel am Verstärkerausgang um die Verstärkung des Trafos niedriger sein können als in dem Fall ohne die Anordnung eines Trafos oder bei Verwendung eines Trafos mit einem 1:1 Übersetzungsverhältnis, so dass die durch den Verstärker erzeugten Verzerrungen geringer sind. Verzerrungen bei einem klassischen Verstärker steigen im Allgemeinen an, je weiter dieser ausgesteuert wird.

Da Trafos bei den für den ADC-Eingang typischen Pegelbereichen meist eine deutlich größere Linearität aufweisen als Verstärker mit üblicher Stromaufnahme, wird mit der Trafoanordnung gemäß Fig. 2, welche eine Impedanztransformation darstellt, eine Verbesserung der Linearität am Eingang des ADC 12 erreicht.

Bei der Darstellung gemäß Fig. 3 ist ein variabler Verstärker 11 eingesetzt. Dieser kann entsprechend der Darstellung gemäß Fig. 4 auch durch die Kombination eines Festverstärkers 21 und eines, diesem in Signalflussrichtung vorgeschalteten variablen Dämpfungsglieds 22 ersetzt werden. Das Dämpfungsglied 22 steht über einen Digital-Analog-Konverter (DAC) 23 mit der DSPE 14 in Verbindung, in welcher eine digitale Steuergröße generiert wird, die nach Analogwandlung über den DAC 23 zur Steuerung des Dämpfungsmaßes genutzt wird.

Mit 24 ist in Fig. 4 ein Selektionsmodul bezeichnet, an dessen Ausgang ein aus dem eingespeisten Antennensignal selektiertes Frequenzband pegelgeregelt ausgegeben wird.

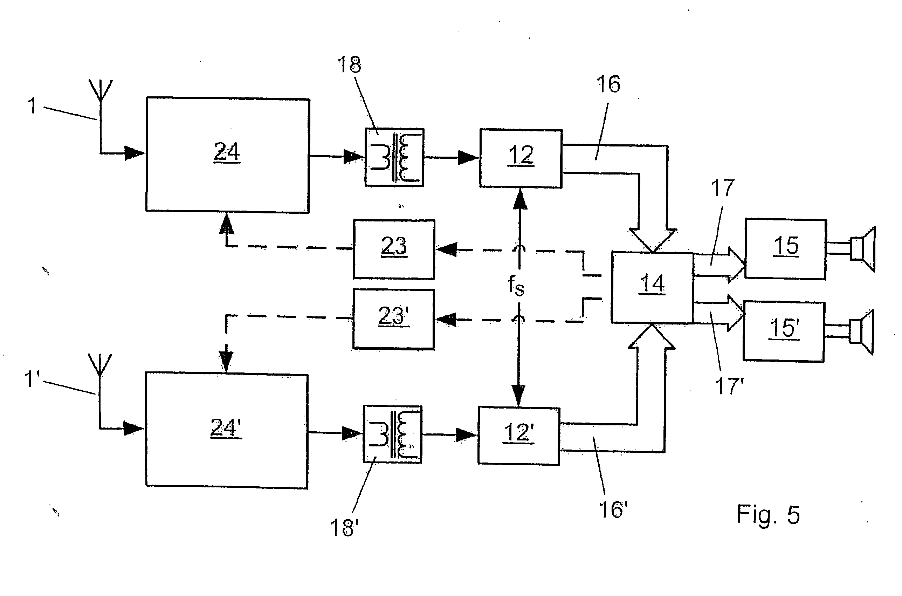

Fig. 5 zeigt die Anwendung der Erfindung für den parallelen Empfang aller FM-und AM-Radiofrequenzen. Zu diesem Zweck ist ein erster, durch das Selektionsmodul 24 gekennzeichneter, auf das Frequenzband von 76 MHz bis 108 MHz eingerichteter und ein zweiter, durch das Selektionsmodul 24' gekennzeichneter, auf das Frequenzband von 150 kHz bis 30 MHz abgestimmter Pfad vorgesehen. Die Strukturen beider Pfade sind grundsätzlich gleich angelegt, so dass innerhalb des Selektionsmoduls zwischen zwei Filtern ein Festverstärker mit einem vorgeschalteten variablen Dämpfungsglied angeordnet ist, wobei sich vor den Eingängen der ADC 12, 12' jeweils ein Trafo 18, 18' zur Impedanztransformation und zur Linearitätsverbesserung befindet. Beide Pfade stehen mit einer DSPE 14 in Verbindung, welche die Aufgabe hat, die von den beiden ADC 12, 12' ausgegebenen digitalen Datenströme weiterzuverarbeiten. Beispielsweise können auf der DSPE 14 Kanalselektions- und Demodulationspfade implementiert sein, die aus den digitalisierten Daten einen oder mehrere AM- oder FM-Kanäle selektieren, demodulieren und die hieraus resultierenden Audiosignale über die DAC 15, 15' ausgeben. Die Anzahl der DAC-Baugruppen bzw. der demodulierten Kanäle kann nahezu beliebig sein und wird lediglich durch die Leistungsfähigkeit der DSPE 14 eingeschränkt.

Beide ADC 12, 12' der Darstellung gemäß Fig. 5 werden mit der gleichen Abtastfrequenz von f_{S} = 130 MHz beaufschlagt. Dies bedeutet, dass im FM-Bereich Unterabtastung, im AM-Bereich hingegen Überabtastung vorliegt.

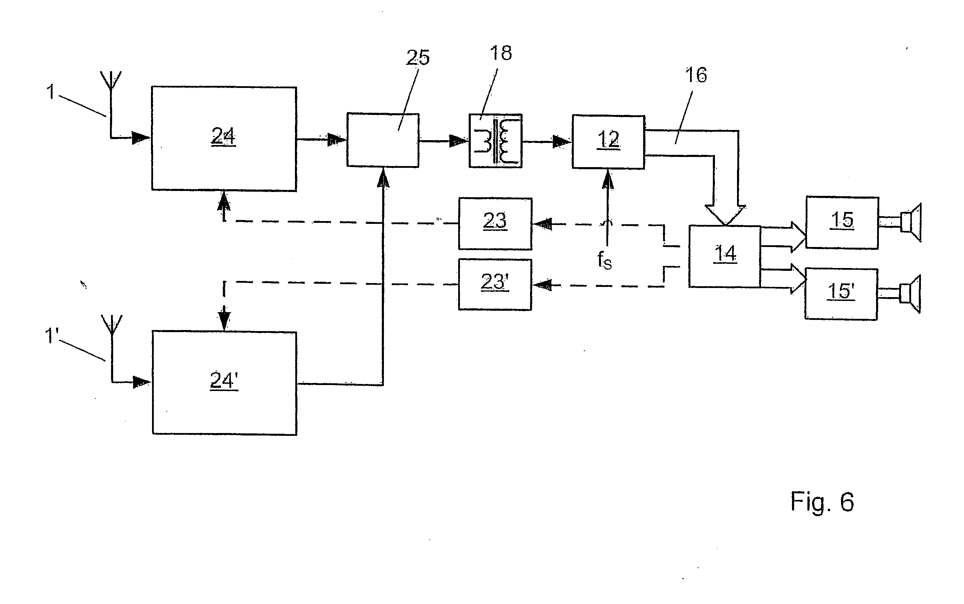

Bei der in Fig. 6 gezeigten Darstellung wird in einem oberen, die Selektionseinheit 24 einbeziehenden Pfad ein FM-Radio-Band, z.B. das europäische UKW-Radio-Band, selektiert und einem Combiner 25 zugeführt. Das zweite Eingangssignal des Combiners 25 bildet das selektierte ausgangsseitige AM-Band des Selektionsmoduls 24'. Das Ausgangssignal des Combiners 25 wird wiederum mittels des Trafos 18 zur Linearitätsverbesserung einem ADC 12 zugeführt, der mit einer Abtastrate von f_{S} =160 MHz arbeitet.

Diese Abtastrate ist so gewählt, dass das UKW-FM-Band nach Maßgabe einer Unterabtastung, das AM-Band hingegen nach Maßgabe einer Überabtastung abgetastet wird. Bei dieser Wahl der Abtastrate wird gewährleistet, dass es unter Verwendung üblicher Filtercharakteristiken zu einem bestmöglichen Aliasingschutz kommt.

Die Zeitsignale beider Pfade werden jeweils separat pegelgeregelt. Gegenüber der Darstellung gemäß Fig. 5 ist nur ein ADC 12 erforderlich, der jedoch eine etwas höhere Abtastrate benötigt, so dass der Hardwareaufwand für das System etwas reduziert werden kann. Erkauft wird dies jedoch mit einer geringeren Blockingfestigkeit des Systems und einem etwas reduzierten Aliasingschutz. Dieses Prinzip ist auch dann anwendbar, wenn das gesamte globale UKW-Radio-Band direkt abgetastet werden soll.

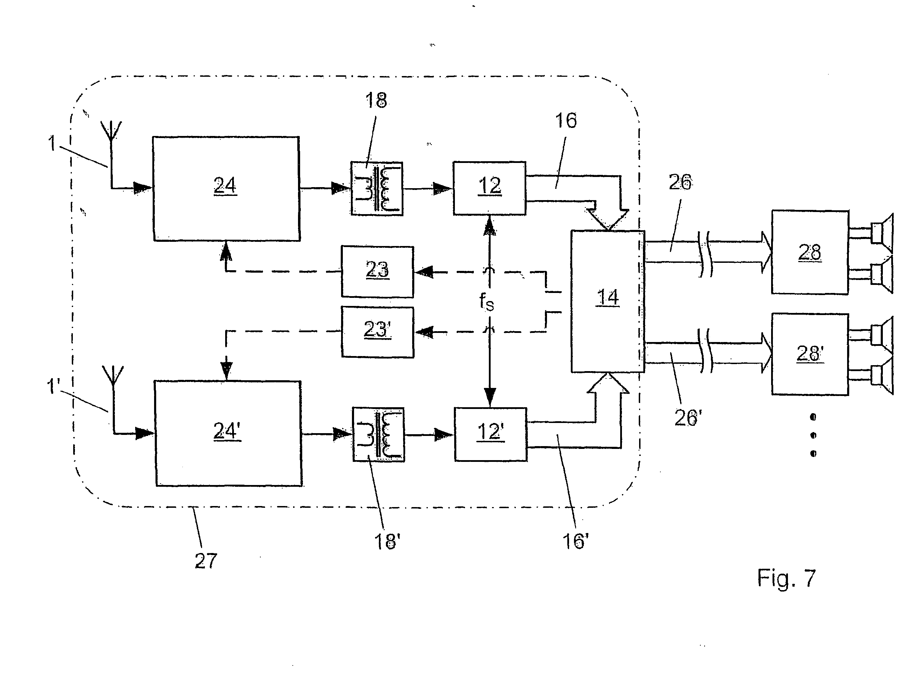

Die in Fig. 7 gezeigte Anordnung verdeutlicht die Grundidee der "digitalen Antenne", hier am Beispiel für das gesamte UKW-Radio-Band und für das Band aller AM-Dienste. Die gesamte Antennenbaugruppe ist mit 27 bezeichnet, wobei die Signale einer oder mehrerer Antennen 1, 1' mittels Direktabtastung in digitale Daten umgewandelt werden, und zwar unter Zugrundelegung des erfindungsgemäßen Prinzips, so dass die - in Signalflussrichtung gesehen - vor der DSPE 14 befindlichen Baugruppen denjenigen der Fig. 5, 6 entsprechen. Die Ausgangssignale der DSPE 14 werden bei der vorliegenden Anordnung jedoch einem oder mehreren digitalen Datenbussen 26, 26' zugeführt, über welche die Ausgangssignale der digitalen Antenne 27 an eines oder mehrere Endgeräte 28, 28' weiterverteilt werden. Die über die Datenbusse 26, 26' weitergeleiteten digitalen Daten können entweder Teile bzw. einzelne Kanäle oder Teilbänder oder auch die gesamten, von der digitalen Antenne 27 direkt abgetasteten Bänder an die Endgeräte weiterleiten. Im letzten Fall würden für das gezeigte Beispiel an jedem der Endgeräte 28, 28' sämtliche FM- und AM-Radiodienste parallel anliegen, so dass jedes Endgerät mittels mehrerer, softwaremäßig realisierter Tuner beliebig viele Kanäle parallel demodulieren bzw. auswerten und ausgeben könnte.

Das gezeigte Konzept der digitalen Antenne 27 bietet somit ein Höchstmaß an Flexibilität und Rekonfigurierbarkeit, da am Ausgang der digitalen Antenne sämtliche weiteren Funktionen softwaremäßig darstellbar sind und das gesamte Nutzband in digitaler Form verfügbar ist.

Falls von der DSPE 14 nur Teilbänder, einzelne Kanäle oder demodulierte Signale oder dergleichen ausgegeben werden, müssen auf der DSPE 14 einzelne oder mehrere Selektionspfade implementiert sein. Damit jedes der Endgeräte 28, 28' auf das jeweils gesamte Nutzband, nämlich das gesamte AM- und FM-Radioband, Zugriff hat, müssen diese Selektionspfade durch Steuersignale von den Endgeräten 28, 28' aus einstellbar sein. Für diesen Fall ist der digitale Datenbus 26, 26' jeweils bidirektional eingerichtet und weist daher eventuell nur eine geringere Kapazität auf, da nur Teile der Ausgangsdaten der digitalen Antenne 27 über den jeweiligen Datenbus übertragen werden. In diesem Fall wird somit ein hoher Grad an Flexibilität, den die digitale Antenne 27 bietet, gegen geringere Anforderungen an die Übertragungskapazität des digitalen Datenbusses eingetauscht.

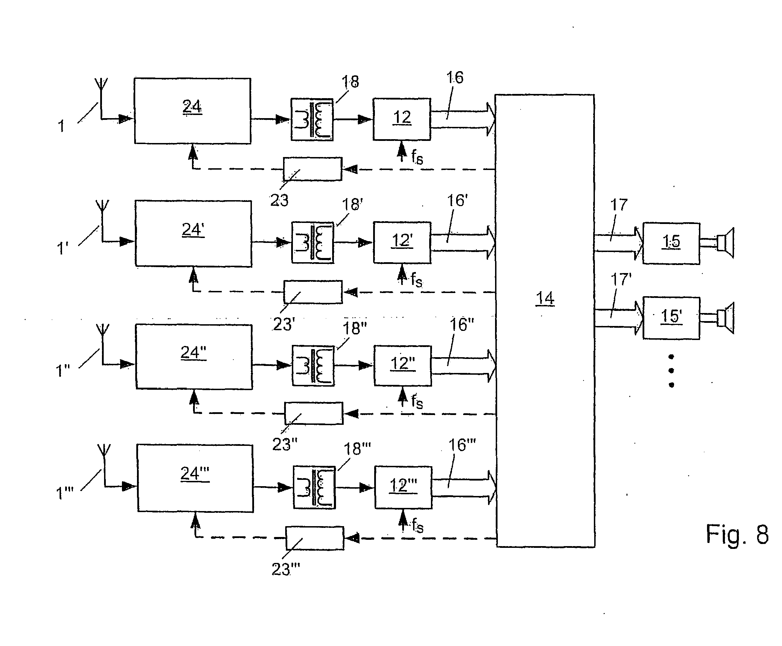

Fig. 8 zeigt die Anwendung der Erfindung bei einem Antennendiversity-Konzept mit vier Antennen 1, 1', 1", 1"', so dass sich insgesamt vier Eingangspfade finden, die einzeln jeweils einem einzelnen Pfad gemäß Fig. 6 entsprechen.

Bei bisherigen Empfängern wurden Diversity-Konzepte beispielsweise nach dem "Switch-Diversity"-Prinzip verwendet, bei denen als Kriterium für die Auswahl einer Antenne die Signalstärke oder -qualität des momentan eingestellten Kanals verwendet wird. Bei dieser Anordnung unterliegt das Nutzband einer jeden angeschlossenen Antenne 1 bis 1''' für sich einer Direktabtastung und wird jeweils in digitaler Form der DSPE 14 zugeführt. Die Diversity-Funktionalität kann dann softwaremäßig dargestellt werden, wobei für jeden zu empfangenden Kanal aus jedem nun digital vorliegenden AntennenSignal dieser Kanal selektiert und gemäß dem Diversity-Konzept kombiniert bzw. geschaltet wird. Auf der DSPE 14 sind in diesem Fall der oder die Tuner ebenfalls softwaremäßig dargestellt.

Aufgrund der völligen softwaremäßigen Darstellung bietet dieses Diversity-Konzept auf der Grundlage einer Direktabtastung somit ein Höchstmaß an Flexibilität und einen großen Spielraum in der Anwendung digitaler Algorithmen und Optimierungen.

Das in Fig. 8 dargestellte Beispiel bezieht sich zwar auf ein Diversity-System für das globale UKW-Radioband mit vier Eingangsantennen und zwei, durch die DSPE 14 dargestellten Tunern mit dementsprechend zwei Audioausgängen für demodulierte Signale. Das Prinzip ist jedoch grundsätzlich auf beliebige Bänder und beliebig viele Eingangsantennen mit einer Anzahl größer als 1 und einer dementsprechend beliebigen Anzahl an "Softwaretunern" erweiterbar.

Es wird im Folgenden auf die Zeichnungsfigur 9 Bezug genommen, die eine Kombination der Erfindung mit analogen Tunern für die Integration weiterer Dienste und Frequenzbereiche darstellt.

Für Frequenzbereiche, für die eine Direktabtastung aufgrund der beschränkten Leistungsfähigkeit heutiger ADCs nicht ökonomisch und effizient ist, kann das Direktabtastungskonzept mit herkömmlichen Mischkonzepten kombiniert werden. Wesentlich für den Erfindungsgedanken ist hierbei eine effiziente und möglichst optimale Ausnutzung des ADC-Dynamikbereiches.

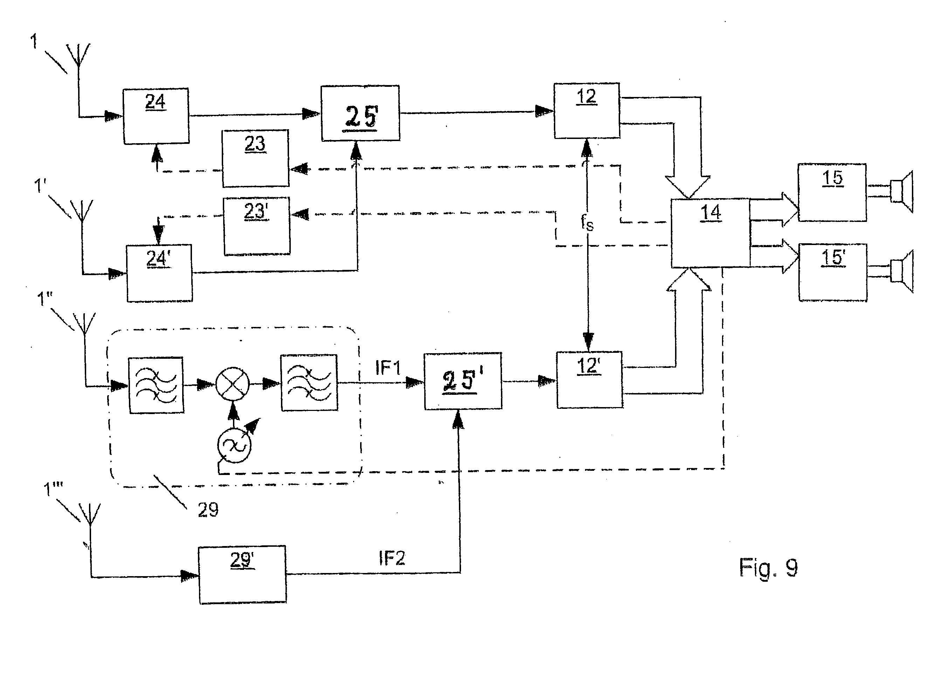

In der Darstellung aus Fig. 9 werden die direktabzutastenden Nutzbänder (hier: AM- und FM-Band) der Antennen 1, 1' in den Selektionsmodulen 24, 24' breitbandig selektiert und im Combiner 25 zu einem einzigen Eingangssignal für den ADC 12 zusammengefasst. Im einfachsten Fall besteht der Combiner aus einer direkten Zusammenführung von Eingangs- und Ausgangsleitungen. Die Abtastrate f_{S} des ADCs ist so gewählt, dass das FM-Band nach Maßgabe der Erfindung unterabgetastet (Frequenzlage in der 2. Nyquistzone) und das AM-Band überabgetastet wird.

Für die Integration von weiteren Frequenzbändern werden von den Antennen 1 ", 1''' Signalfrequenzbänder mittels eines oder mehrerer analoger Tuner 29, 29' auf eine oder mehrere Zwischenfrequenzen (IF1, IF2) umgesetzt. Diese Zwischenfrequenzsignale werden mittels eines Combiners 25' zusammengeführt und in einem weiteren ADC 12' oder einem weiteren ADC-Kanal abgetastet. Bei geeigneter Wahl der Zwischenfrequenzen und bei ausreichender Selektion der Zwischenfrequenzsignale wird erreicht, dass eine gleichzeitige Digitalisierung der Zwischenfrequenzsignale ohne wesentliche Aliasingbeeinflussung möglich ist. Die Verwendung mehrerer gleicher Tuner bietet die Möglichkeit des Antennenschalt- und Phasendiversity oder den gleichzeitigen Empfang mehrerer Kanäle oder Dienste auf unterschiedlichen Frequenzen. Die Auswertung der Signale auf den Zwischenfrequenzen erfolgt wie bei der Direktabtastung mittels mehrerer auf der DSPE 14 implementierter digitaler Tunerpfade, mittels derer ebenfalls eine gleichzeitige Auswertung der im ADC 12 direktabgetasteten Kanäle möglich ist.

Eine Erweiterung dieses Konzeptes auf zusätzliche Bänder und ADC-Kanäle ist ebenfalls Gegenstand dieser Erfindung. Beispielsweise kann dem ADC 12' parallel zu den beiden Tunerpfaden 29, 29' über den Combiner 25' ein weiteres direktabgetastetes FM-Band für die Implementierung von Antennen- oder Phasendiversity zugeführt werden. Alternativ kann die Integration weiterer direkt abzutastender Bänder auch über einen oder mehrere zusätzliche ADC oder ADC-Kanäle erfolgen.

Die Zuführung dieses Bandes zu der DSPE ist ebenfalls über einen weiteren ADC oder ADC-Kanal möglich.

Es wird im Folgenden auf die Zeichnungsfigur 10 Bezug genommen, die eine Kombination der Erfindung mit analogen Tunern für die Integration weiterer Dienste und Frequenzbereiche mit optimierter Frequenzbereichsausnutzung der ADCs darstellt.

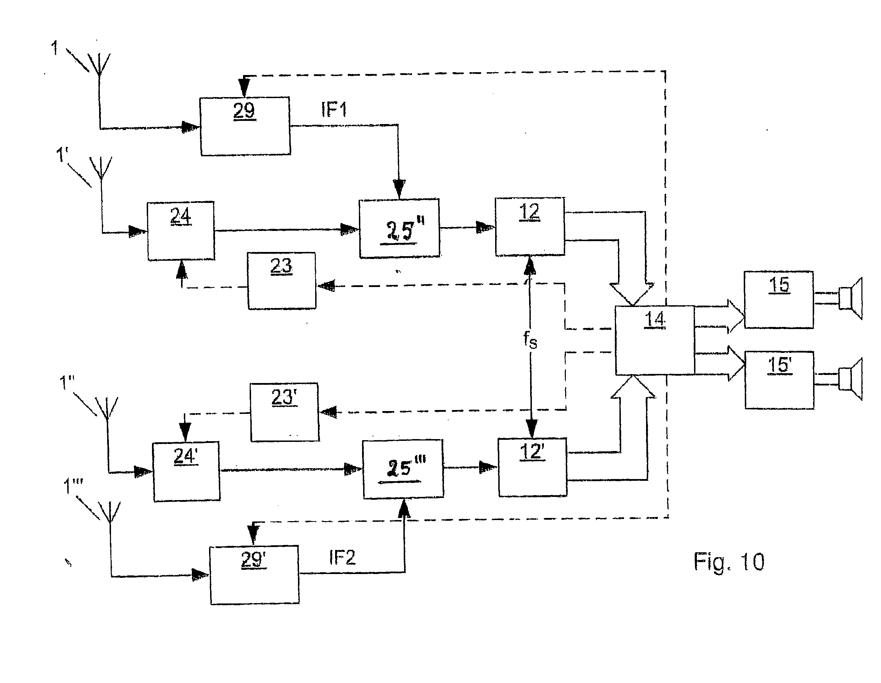

Gegenüber der Darstellung aus Fig. 9 werden die beiden Zwischenfrequenzsignale (IF1, IF2) und die direktabzutastenden Ausgangssignale der Selektionsmodule 24, 24' nun nicht demselben ADC bzw. ADC-Kanal zugeführt, sondern sie werden auf die beiden ADCs 12, 12' aufgeteilt und jeweils mittels eines Combiners 25", 25''' dem jeweiligen ADC zugeführt. Da die Zwischenfrequenzsignale für den Empfang einzelner Kanäle gegenüber dem direktabgetasteten Band meist schmalbandig sind, wird eine bessere Ausnutzung des verfügbaren ADC-Eingangsfrequenzbereiches ermöglicht. Bei gleichem Aliasingschutz wie in der Anordnung in Fig. 9 kann die erforderliche Abtastrate f_{S} der ADC für die Anordnung nach Fig. 10 reduziert werden.

Auch für diesen konzeptionellen Ansatz ist eine Ausweitung auf weitere ADCs oder ADC-Kanäle oder weitere Zwischenfrequenzsignale und Direktabtastungsbänder im Erfindungsgedanken mit inbegriffen.

Ebenfalls im Erfindungsgedanken inbegriffen ist die Verwendung von Umschaltern anstatt Combinern. Für eine derartige Anordnung wird ein erhöhter Aliasingschutz erreicht, auf Kosten eines Verlustes der gleichzeitigen Empfangbarkeit der dem Schalter (bzw. Combiner) zugeführten Signale. Implizit kann ein derartiges Verhalten auch über eine Absenkung bzw. eine zusätzliche Dämpfung der Pegel in den analogen Tunern und/oder den Selektionsmodulen unter Beibehaltung der Combiner erreicht werden.

Es wird im Folgenden auf die Zeichnungsfigur 11 Bezug genommen, die eine Kombination der Erfindung mit einem Antennenschaltdiversity darstellt.

Von mehreren Antennen 1, 1', 1" wird stets nur eine Antenne über einen Schalter 31 dem Direktabtastungsempfänger bestehend aus dem Selektionsmodul 24, (hier: für den FM-Empfang eingerichtet), dem ADC 12 mit der Abtastfrequenz fₛ, den DACs 23, 15, 15' und der DSPE 14 zugeführt. Die Logik für die Umschaltung zwischen den Antennen ist im Diversitymodul 30 integriert. Alternativ kann diese Logik auch in einer digitalen Implementierung in der DSPE enthalten sein, in der eine Auswertung des digitalisierten Empfangssignals erfolgt, auf dessen Basis zwischen den Antennen umgeschaltet wird.

Dieses Konzept ermöglicht die Empfangssignaloptimierung mittels Antennenschaltdiversity für ein begrenztes Frequenzband bzw. einen einzelnen Kanal, was für viele Anwendungsfälle ausreichend ist. Gegenüber einem Direktabtastungsempfänger mit Phasendiversity für alle Empfangskanäle, für den das komplette Nutzband mindestens zweifach direktabgetastet werden muss, wird der Hardwareaufwand für dieses Antennenschaltdiversitykonzept deutlich reduziert, da das Nutzband nur einfach abgetastet wird. Dieses Antennenschaltdiversitykonzept lässt sich auf alle bisher dargestellten Formen der Erfindung ausweiten, welche damit ebenfalls Gegenstand dieser Erfindung sind.

## Patentansprüche

1. Empfangsystem insbesondere für den Radiorundfunk im AM- und FM-Bereich mit einem eingangsseitigen analogen, zur Einkopplung eines gesamten Empfangsbandes bestimmten Teil (8) und einem ausgangsseitigen digitalen Teil (13), mit wenigstens einem Analog-Digital-Konverter (ADC; 12), der zur Abtastung des Ausgangsbandes des analogen Teiles (8) nach Maßgabe einer Abtastfrequenz f_{S} eingerichtet ist, wobei das genannte Ausgangsband aus einem durch eine obere Frequenz fₘₐₓ und eine untere Frequenz fₘᵢₙ begrenzten Nutzband und relativen oberen und unteren Übergangsbändern b_{Üg,ob}, b_{Üg,un} besteht, **dadurch gekennzeichnet, dass** die Abtastfrequenz f_{S} im Verhältnis zu dem Nutzband zumindest teilweise nach Art einer Unterabtastung angelegt ist, und dass das unterabgetastete Nutzband mit den Eckfrequenzen fₘᵢₙ und fₘₐₓ vollständig in der zweiten Nyquistzone liegt, so dass gilt f_{S} > fₘₐₓ und f_{S}/2 < fₘᵢₙ.

2. Empfangssystem nach Anspruch 1, **dadurch gekennzeichnet, dass** die relativen Bandbreiten der oberen und unteren Übergangsbänder b_{Üg,ob}, b_{Üg,un} gleich angelegt sind, so dass die Abtastfrequenz f_{S} mit der Maßgabe bemessen ist, dass gilt f_{S} = fₘᵢₙ + fₘₐₓ/2.

3. Empfangssystem nach Anspruch 1 oder 2, **dadurch gekennzeichnet, dass** der analoge Teil (8) aus wenigstens einem, zur ausgangsseitigen Bereitstellung eines bandbegrenzten, pegelgeregelten analogen Signals eingerichteten Selektionsmodul (24, 24') besteht.

4. Empfangsystem nach Anspruch 3, **dadurch gekennzeichnet, dass** jedes Selektionsmodul (24, 24') aus wenigstens einem Filter (9, 10) und einem regelbaren Verstärker (11) besteht.

5. Empfangssystem nach Anspruch 3, **dadurch gekennzeichnet, dass** jedes Selektionsmodul (24, 24') aus wenigstens einem Filter (9, 10), einem festen Verstärker (21) und einem regelbaren Dämpfungsglied (22) besteht.

6. Empfangssystem nach Anspruch 4 oder 5, **dadurch gekennzeichnet, dass** der Verstärker (11, 21) mit der Maßgabe eingerichtet ist, dass, betrachtet am Ausgang des ADC (12), der vom Verstärker in einem Kanal des Nutzbandes erzeugte Rauschpegel weniger als 10 dB oberhalb oder unterhalb des von dem ADC (12) in diesem Kanal erzeugten Rauschpegels liegt.

7. Empfangssystem nach einem der vorrangegangenen Ansprüche 1 bis 6, **gekennzeichnet durch** einen Trafo (18, 18'), der dem ADC (12) zur Linearitätsverbesserung des Eingangssignals vorgeschaltet ist.

8. Empfangssystem nach einem der vorrangegangenen Ansprüche 1 bis 7, **dadurch gekennzeichnet, dass** der digitale Teil (13) zumindest aus einer digitalen Signalprozessierungseinheit (DSPE; 14) und wenigstens einem Digital-Analog-Konverter (DAC; 15) besteht.

9. Empfangssystem nach Anspruch 8, **dadurch gekennzeichnet, dass** die DSPE (14) zumindest zur Selektion von Kanälen aus dem eingangsseitigen Nutzband eingerichtet ist.

10. Empfangssystem nach Anspruch 8, **dadurch gekennzeichnet, dass** die DSPE (14) zumindest zur Selektion von Kanälen aus dem eingangsseitigen Nutzband sowie zur Demodulation eingerichtet ist.

11. Empfangssystem nach Anspruch 10, **gekennzeichnet durch** wenigstens zwei, jeweils zur Einkopplung unterschiedlicher Empfangsbänder eingerichtete Selektionsmodule (24, 24'), die jeweils über einen ADC (12, 12') mit der DSPE (14) in Verbindung stehen, wobei die DSPE (14) zur ausgangsseitigen Darstellung von jeweils ein demoduliertes Signal führenden Datenströmen (17, 17') eingerichtet ist.

12. Empfangssystem nach Anspruch 10, **gekennzeichnet durch** wenigstens zwei, jeweils zur Einkopplung unterschiedlicher Empfangsbänder eingerichtete Selektionsmodule (24, 24'), deren Ausgangssignale über einen Combiner (25) und einen ADC (12) mit der DSPE (14) in Verbindung stehen, wobei die DSPE (14) zur ausgangsseitigen Darstellung von jeweils ein demoduliertes Signal führenden Datenströmen (17, 17') eingerichtet ist.

13. Empfangssystem nach einem der Ansprüche 8 bis 10, **gekennzeichnet durch** eine Mehrzahl an Selektionsmodulen (24, 24', 24", 24'''), die jeweils zur Einkopplung des vollständigen Empfangsbandes eingerichtet sind und über jeweilige ADC (12, 12', 12", 12''') mit der DSPE (14) in Verbindung stehen.

14. Empfangssystem nach Anspruch 13, **dadurch gekennzeichnet, dass** die DSPE (14) zur eingangsseitigen Anbindung von x, jeweils eine Antenne (1, 1', 1 ", 1''') aufweisenden Signalpfaden und zur ausgangsseitigen Darstellung von y Datenströmen (17, 17') eingerichtet ist, die jeweils demodulierte Signale führen.

15. Empfangsystem nach einem der Ansprüche 8 bis 10, **gekennzeichnet durch** wenigstens zwei, jeweils zur Einkopplung unterschiedlicher Empfangsbänder eingerichtete Selektionsmodule (24, 24'), die jeweils über einen ADC (12, 12') mit der DSPE (14) in Verbindung stehen, wobei die DSPE (14) zur ausgangsseitigen Darstellung mehrerer, jeweils das vollständige Empfangsband darstellender Datenströme (26, 26') eingerichtet ist.

16. Empfangssystem nach einem der Ansprüche 11 bis 15, **dadurch gekennzeichnet, dass** eine Mehrzahl von ADC (12, 12', 12", 12''') mit einer gemeinsamen Abtastfrequenz f_{S} beaufschlagt ist.

17. Empfangssystem nach einem der Ansprüche 8 bis 16, **dadurch gekennzeichnet, dass** die DSPE (14) zur Steuerung des Dämpfungsgliedes (22) eingerichtet ist.

18. Empfangssystem nach einem der Ansprüche 8 bis 16, **dadurch gekennzeichnet, dass** die DSPE (14) zur Steuerung des regelbaren Verstärkers (11) eingerichtet ist.

19. Empfangssystem nach einem der Ansprüche 17 bis 18, **dadurch gekennzeichnet, dass** Teilsignalbänder einer oder mehrerer weiterer Antennen (1 ", 1''') mittels einem oder mehrerer analoger Tuner (29, 29') auf eine oder mehrere Zwischenfrequenzen (IF1, IF2) umsetzbar und mittels eines Combiners (25') oder Umschalters einem oder mehreren zusätzlichen ADCs (12') oder ADC-Kanälen zuführbar sind.

20. Empfangssystem nach Anspruch 19, **dadurch gekennzeichnet, dass** die Ausgangssignale (IF1, IF2) eines oder mehrerer Tuner (29, 29') auf die Eingänge mehrerer ADC (12, 12') oder ADC-Kanäle verteilt und jeweils mit direktabgetasteten Signalbändern kombiniert und gemeinsam oder umgeschaltet einem ADC (12, 12') oder ADC-Kanal zugeführt sind.

21. Empfangssystem nach Anspruch 20, **dadurch gekennzeichnet, dass** die Ausgangssignale mehrerer Antennen (1, 1 ", 1 ") mittels eines Umschalters (31) dem Eingang eines Selektionsmoduls (24) zuführbar sind.

22. Empfangssystem nach Anspruch 21, **dadurch gekennzeichnet, dass** der Umschalter (31) auf der Basis einer Auswertung in einem analog realisierten Diversitymodul (30) steuerbar ist.

23. Empfangssystem nach Anspruch 21, **dadurch gekennzeichnet, dass** der Umschalter (31) auf der Basis einer Auswertung des digitalisierten Signals in der DSPE (14) steuerbar ist.
